(19) Europäisches Patentamt
European Patent Office
Office européen des brevets

(11) **EP 4 155 760 B1**

(12) **EUROPEAN PATENT SPECIFICATION**

(45) Date of publication and mention
of the grant of the patent:
**02.04.2025 Bulletin 2025/14**

(21) Application number: **20942120.5**

(22) Date of filing: **26.06.2020**

(51) International Patent Classification (IPC):
**G01S 7/481** *(2006.01)*    **G01S 17/42** *(2006.01)*
**G01S 17/10** *(2020.01)*    **G02B 26/10** *(2006.01)*
**G02B 26/08** *(2006.01)*

(52) Cooperative Patent Classification (CPC):
**G01S 7/4817; G01S 7/4812; G01S 7/4815;
G01S 7/4818; G01S 17/42; G02B 26/0833;
G02B 26/101; G02B 26/106;** G01S 17/10

(86) International application number:
**PCT/JP2020/025375**

(87) International publication number:
**WO 2021/260950 (30.12.2021 Gazette 2021/52)**

(54) **OPTICAL SCANNING DEVICE AND RANGING APPARATUS**

OPTISCHE ABTASTVORRICHTUNG UND ENTFERNUNGSMESSVORRICHTUNG

DISPOSITIF DE BALAYAGE OPTIQUE ET APPAREIL DE TÉLÉMÉTRIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.03.2023 Bulletin 2023/13**

(73) Proprietor: **MITSUBISHI ELECTRIC
CORPORATION
Chiyoda-ku
Tokyo 100-8310 (JP)**

(72) Inventors:
• **SHIRAO, Mizuki**
**Tokyo 100-8310 (JP)**

• **SHODA, Fumio**
**Tokyo 100-8310 (JP)**

(74) Representative: **Pfenning, Meinig & Partner mbB
Patent- und Rechtsanwälte
Theresienhöhe 11a
80339 München (DE)**

(56) References cited:
WO-A1-2018/200754    WO-A1-2019/002514
WO-A1-2019/031403    JP-A- 2009 216 789
JP-A- 2010 068 435    JP-A- 2015 501 951
JP-A- 2018 049 223    US-A1- 2018 136 318
US-A1- 2018 267 151    US-A1- 2019 391 243

**Description**

TECHNICAL FIELD

The present invention relates to an optical scanning device for radiating light toward an object and then reflecting the light reflected by the object, and a ranging apparatus including the optical scanning device.

BACKGROUND ART

Some ranging apparatuses include a ranging apparatus including an optical scanning device for radiating light toward an object and then reflecting the light reflected by the object.

Patent Literature 1 below discloses a micro electro mechanical systems (MEMS) scanner that can be used as the optical scanning device.

The MEMS scanner includes a mirror for reflecting light output from a light source toward an object and then reflecting the light reflected by the object toward an optical receiver. The MEMS scanner further includes an actuator that rotates the mirror about a first shaft and rotates the mirror about a second shaft.

When light is output from the light source toward the mirror, for example, if the actuator rotates the mirror about two shafts as follows, optical scanning can be performed on the object.

First, the actuator changes a rotation angle $\theta x$ about the first shaft from $\theta x_1$ to $\theta x_2$, and then changes a rotation angle $\theta y$ about the second shaft by $\Delta\theta$ (hereinafter, referred to as a "first rotational operation"). Next, the actuator changes the rotation angle $\theta x$ about the first shaft from $\theta x_2$ to $\theta x_1$, and then changes the rotation angle $\theta y$ about the second shaft by $\Delta\theta$ (hereinafter, referred to as a "second rotational operation"). Then, the actuator alternately repeats the first rotational operation and the second rotational operation.

US 2018/267151 A1 discloses methods and systems for performing three dimensional LIDAR measurements with multiple illumination beams scanned over a three dimensional environment by one or more optical phase modulation devices are described herein. In one aspect, illumination light from each LIDAR measurement channel is emitted to the surrounding environment in a different direction by an optical phase modulation device. The optical phase modulation device also directs each amount of return measurement light onto a corresponding photodetector.

US 2018/136318 A1 describes a situation awareness sensor that includes a plurality of N sensor channels, each channel including an optical phased array having a plurality of solid-state laser emitters, a command circuit and a detector.

WO 2018/200754 A1 describes wavelength division multiplexed LiDAR systems, methods, and structures that advantageously provide a wide field of view without employing lasers having a large tuning range.

US 2019/391243 A1 discloses optical sensing system for a vehicle include a modular architecture. Light can be transmitted to an optical signal processing module, which can include a photonic integrated circuit (PIC) that can create one or more signals with tailored amplitude, phase, and spectral characteristics.

WO 2019/002514 A1 discloses a light ranging and detection system achieving reconfigurable very wide field of view, high sampling of spatial points per second with high optical power handling by using architecture to efficiently combine different wavelengths, time and frequency coding, and spatial selectivity. The transmitter is capable of generating multiple narrow beams, encoding different beams and transmitting in different spatial directions.

CITATION LIST

PATENT LITERATURE

Patent Literature 1: Japanese National Patent Publication No. 2007-522529

SUMMARY OF INVENTION

TECHNICAL PROBLEM

The resolution of the optical scanning with respect to the object depends on the magnitude of $\Delta\theta$, and the smaller $\Delta\theta$, the higher the resolution of the optical scanning. However, due to the mechanical structure of the actuator, when a wide viewing angle is to be provided, it is difficult to reduce the deflection angle $\Delta\theta$ for one time, and thus there is a problem that desired resolution cannot be obtained.

The present invention has been made to solve the above problem, and an object of the present invention is to obtain an optical scanning device capable of enhancing the resolution of optical scanning as compared with an optical scanning device configured to scan light only by causing an actuator to rotate a mirror about two shafts.

SOLUTION TO PROBLEM

The present invention is defined by the independent claims. Advantageous embodiments are described in the dependent claims, the following description and the drawings. An optical scanning device according to the present invention inter alia includes: a light source capable of changing a wavelength or a phase of a light to be output; an optical mode converter connected to an optical waveguide through which the light output from the light source transmits, and configured to radiate the light received through the optical waveguide, wherein the optical mode converter is configured to change a radiation direction of the light to be transmitted from the optical mode converter, in accordance with a change in wavelength of the light output from the light source or phase of the light output from the light source; a mirror arranged around the optical mode converter, and configured to reflect the light radiated from the optical mode converter and then reflected from an object, toward an optical receiver; and an actuator having a first planar portion, a second planar portion, and a third planar portion, wherein the actuator is configured to rotate the first planar portion about each of first and second shafts .

ADVANTAGEOUS EFFECTS OF INVENTION

According to the present invention, the optical scanning device can enhance the resolution of optical scanning as compared with an optical scanning device configured to scan light only by causing an actuator to rotate the first planar portion about each of first and second shafts.

BRIEF DESCRIPTION OF DRAWINGS

FIG. 1 is a configuration diagram illustrating an optical scanning device 2 according to a first embodiment.
FIG. 2 is a configuration diagram illustrating a ranging apparatus including the optical scanning device 2 according to the first embodiment.
FIG. 3 is a hardware configuration diagram of a computer in a case where a distance calculation unit 11 is implemented by software, firmware, or the like.
FIG. 4 is an explanatory diagram illustrating an example of a scanning trajectory of light.
FIG. 5 is an explanatory diagram illustrating a structure of an optical mode converter 5.
FIG. 6 is a configuration diagram illustrating another ranging apparatus including the optical scanning device 2 according to the first embodiment.
FIG. 7 is a configuration diagram illustrating an optical scanning device 2 according to a second embodiment.
FIG. 8 is an explanatory diagram illustrating an example of a scanning trajectory of light.
FIG. 9 is a configuration diagram illustrating an optical scanning device 2 according to a third embodiment.
FIG. 10 is a configuration diagram illustrating a ranging apparatus including the optical scanning device 2 according to the third embodiment.
FIG. 11 is a configuration diagram illustrating an optical scanning device 2 according to a fourth embodiment.
FIG. 12 is a configuration diagram illustrating an optical scanning device 2 according to a fifth embodiment but not being an embodiment of the invention.
FIG. 13 is an explanatory diagram illustrating an example of a scanning trajectory of light.

DESCRIPTION OF EMBODIMENTS

In order to explain the present invention in more detail, a mode for carrying out the present invention will be described below with reference to the accompanying drawings.

First Embodiment.

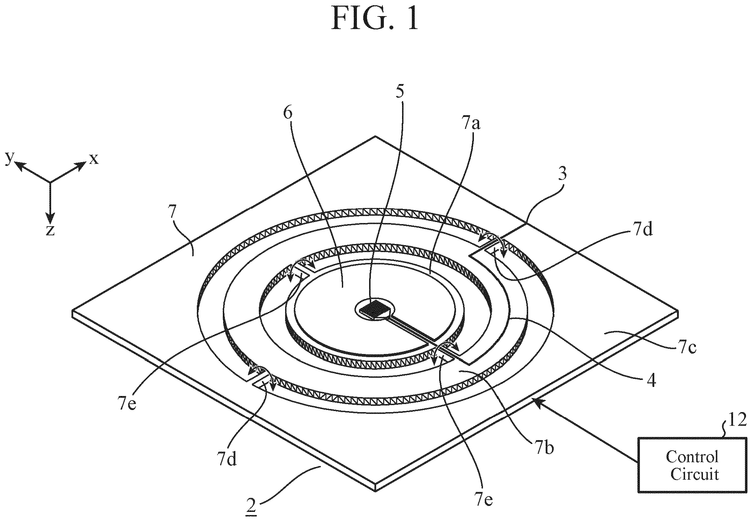

FIG. 1 is a configuration diagram illustrating an optical scanning device 2 according to a first embodiment.

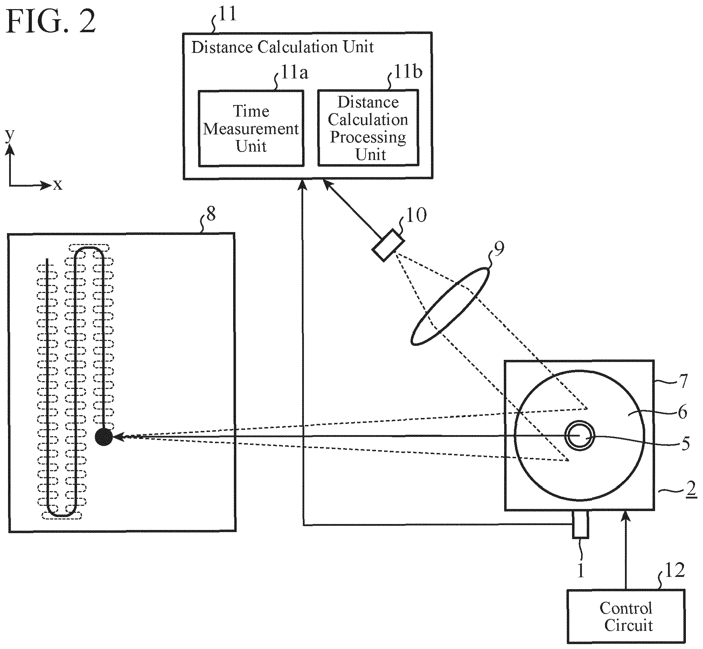

FIG. 2 is a configuration diagram illustrating a ranging apparatus including the optical scanning device 2 according to the first embodiment.
A light source 1 is an oscillator that outputs light to the optical scanning device 2.
The light source 1 can change a wavelength or a phase of light output to the optical scanning device 2.
In addition, the light source 1 outputs a signal (hereinafter, referred to as a "first timing signal") indicating a timing at which the light is output to the optical scanning device 2 to a distance calculation unit 11.
In the ranging apparatus illustrated in FIG. 2, the light source 1 provided outside the optical scanning device 2 is directly connected to the optical scanning device 2. However, this is merely an example, and the light source 1 may be connected to the optical scanning device 2 via an optical fiber or the like.

In addition, the optical scanning device 2 may include the light source 1.

The optical scanning device 2 is installed in a three-dimensional space represented by an x-y-z coordinate system.

The optical scanning device 2 includes an optical input port 3, an optical waveguide 4, an optical mode converter 5, a mirror 6, and an actuator 7.

The optical scanning device 2 is a device for radiating light output from the light source 1 toward an object 8 and then reflecting the light reflected by the object 8.

One end of the optical waveguide 4 is connected to the optical input port 3.

The optical input port 3 receives the light output from the light source 1.

The optical waveguide 4 includes, for example, an optical path formed by a core and a cladding.

One end of the optical waveguide 4 is connected to the optical input port 3, and the other end of the optical waveguide 4 is connected to the optical mode converter 5.

The light received by the optical input port 3 is propagated to the optical mode converter 5 via the optical waveguide 4.

The optical mode converter 5 is implemented by, for example, a grating coupler or an optical phase array.

The optical mode converter 5 changes a radiation direction of light output from the light source 1 in accordance with a change in wavelength or phase of the light output from the light source 1.

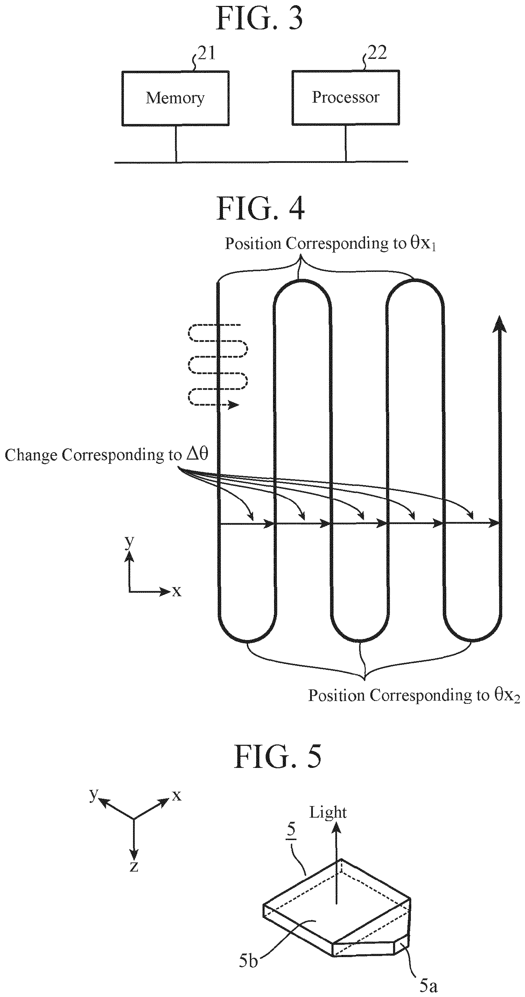

As illustrated in FIG. 5, the structure of the optical mode converter 5 is a boxlike structure that takes in the light propagated through the optical waveguide 4.

FIG. 5 is an explanatory diagram illustrating the structure of the optical mode converter 5. In FIG. 5, a waveguide connection port 5a is an input port connected to the other end of the optical waveguide 4.

Of the inner faces of the box, at least the inner face of a light radiation face 5b of the optical mode converter 5 is provided with a grating coupler or an optical phase array. Each of the grating coupler and the optical phase array corresponds to a light transmission type diffraction grating.

The optical mode converter 5 radiates light propagated through the optical waveguide 4 toward the object 8.

Since the grating coupler or the like is provided on the inner face of the box, the radiation direction of the light radiated from the optical mode converter 5 is switched with a change in wavelength of the light output from the light source 1. The direction in which the radiation direction is switched is a direction that intersects with the direction in which the radiation direction is switched with rotation about a first shaft 7d, or a direction that intersects with the direction in which the radiation direction is switched with rotation about a second shaft 7e.

In the optical mode converter 5 illustrated in FIG. 5, a grating coupler or the like is provided on the inner face of the light radiation face 5b. However, this is merely an example, and the optical mode converter 5 may include a converter or the like that switches the radiation direction of the light when the wavelength or the phase of the light output from the light source 1 changes.

The mirror 6 is a device for reflecting light, which is radiated from the optical mode converter 5 and then reflected by the object 8, toward an optical receiver 10 to be described later.

The mirror 6 included in the optical scanning device 2 illustrated in FIG. 1 may be any mirror, for example, a metal mirror or a glass mirror.

The actuator 7 includes a first planar portion 7a holding the optical waveguide 4, the optical mode converter 5, and the mirror 6, a second planar portion 7b holding the optical waveguide 4, a third planar portion 7c holding the optical input port 3, the first shaft 7d, and the second shaft 7e.

Each of the first planar portion 7a, the second planar portion 7b, and the third planar portion 7c is disposed in parallel with the x-y plane in the drawing.

The planar shape of the first planar portion 7a is circular.

The planar shape of the second planar portion 7b is a ring, and the first planar portion 7a is disposed inside the ring.

The first planar portion 7a and the second planar portion 7b are connected via the second shaft 7e.

The planar shape of the third planar portion 7c is rectangular, and a circular hole is provided inside. The second planar portion 7b is disposed inside the third planar portion 7c.

The second planar portion 7b and the third planar portion 7c are connected via the first shaft 7d.

The first shaft 7d is a rotation shaft of the actuator 7 in a direction parallel to the x-axis.

The second shaft 7e is a rotation shaft of the actuator 7 orthogonal to the first shaft 7d, and is a rotation shaft in a direction parallel to the y-axis.

In the optical scanning device 2 illustrated in FIG. 1, the first shaft 7d and the second shaft 7e are orthogonal to each other. However, this disclosure is not limited to this example in which the first shaft 7d and the second shaft 7e are strictly orthogonal to each other, and may be deviated from the orthogonal within a range of causing no problem in a practical use. The term "orthogonal" in the present specification is a concept including an example deviated from the orthogonal within a range of causing no problem in a practical use.

The actuator 7 rotates each of the optical mode converter 5 and the mirror 6 about the first shaft 7d and rotates each of the optical mode converter 5 and the mirror 6 about the second shaft 7e in accordance with a control signal output from a control circuit 12 described later.

Each of the principle of rotation about the first shaft 7d and the principle of rotation about the second shaft 7e in the actuator 7 is known (See, for example, Patent Literature 1).

In the optical scanning device 2 illustrated in FIG. 1, the planar shape of the first planar portion 7a is circular. However, this is merely an example, and for example, the planar shape of the first planar portion 7a may be rectangular. When the planar shape of the first planar portion 7a is rectangular, the planar shape of the second planar portion 7b is a rectangular ring, and the inner hole shape of the third planar portion 7c is rectangular.

The object 8 is an object to be ranged by the ranging apparatus illustrated in FIG. 2.

The object 8 is installed in the same three-dimensional space as the optical scanning device 2.

In FIG. 2, in order to simplify the drawing, the shape of the object 8 is drawn to be a planar shape. However, in practice, the shape of the object 8 is three-dimensional, and the face facing the optical scanning device 2 among the faces of the object 8 is optically scanned by the optical scanning device 2.

In the ranging apparatus illustrated in FIG. 2, in order to simplify the description, the three-dimensional space in which the optical scanning device 2 is installed and the three-dimensional space in which the object 8 is installed are represented in the same coordinate system. In a case where the coordinate system (hereinafter, referred to as a "first coordinate system") of the three-dimensional space in which the optical scanning device 2 is installed and the coordinate system (hereinafter, referred to as a "second coordinate system") of the three-dimensional space in which the object 8 is installed are separately represented, the x-axis direction in the first coordinate system and the x-axis direction in the second coordinate system are not necessarily the same direction. In addition, the y-axis direction in the first coordinate system and the y-axis direction in the second coordinate system are not necessarily the same direction.

A lens 9 is an optical element for condensing the light reflected by the mirror 6 on the optical receiver 10.

The optical receiver 10 receives the light condensed by the lens 9.

Further, the optical receiver 10 outputs a signal (hereinafter, referred to as a "second timing signal") indicating the timing of receiving the light to the distance calculation unit 11.

By disposing the optical receiver 10 in the vicinity of the mirror, the optical receiver 10 may directly receive the reflected light without passing through the mirror. In this case, the mirror is unnecessary.

The distance calculation unit 11 is implemented by, for example, a distance calculation circuit.

The distance calculation unit 11 includes a time measurement unit 11a and a distance calculation processing unit 11b.

The distance calculation unit 11 calculates the distance from the optical scanning device 2 to the object 8 on the basis of the time from when the first timing is received from the light source 1 to when the second timing is received from the optical receiver 10.

The time measurement unit 11a measures a time from when light is radiated from the optical mode converter 5 to when the reflected light is received by the optical receiver 10. That is, the time measurement unit 11a measures the time from when the first timing is received from the light source 1 to when the second timing is received from the optical receiver 10.

The distance calculation processing unit 11b calculates the distance from the optical scanning device 2 to the object 8 on the basis of the time measured by the time measurement unit 11a.

The control circuit 12 is provided outside the optical scanning device 2.

The control circuit 12 controls each of a rotational operation around the first shaft 7d and a rotational operation around the second shaft 7e in the actuator 7.

In FIG. 1, it is assumed that the distance calculation unit 11 which is a component of the ranging apparatus is implemented by a distance calculation circuit which is dedicated hardware.

The distance calculation circuit corresponds to, for example, a single circuit, a composite circuit, a programmed processor, a parallel programmed processor, an application specific integrated circuit (ASIC), a field-programmable gate array (FPGA), or a combination thereof.

The invention is not limited to this example in which the distance calculation unit 11 is implemented by dedicated hardware, and the distance calculation unit 11 may be implemented by software, firmware, or a combination of software and firmware.

The software or firmware is stored in a memory of a computer as a program. The computer means hardware that executes a program, and corresponds to, for example, a central processing unit (CPU), a central processing device, a processing unit, an arithmetic unit, a microprocessor, a microcomputer, a processor, or a digital signal processor (DSP).

FIG. 3 is a hardware configuration diagram of a computer in a case where the distance calculation unit 11 is implemented by software, firmware, or the like.

In a case where the distance calculation unit 11 is implemented by software, firmware, or the like, a program for causing a computer to execute a processing procedure performed by the distance calculation unit 11 is stored in a memory 21. Then, a processor 22 of the computer executes the program stored in the memory 21.

Next, the operation of the ranging apparatus illustrated in FIG. 2 will be described.

The light source 1 outputs light to the optical input port 3 of the optical scanning device 2.

In addition, the light source 1 outputs a first timing signal indicating a timing at which light is output to the distance calculation unit 11.

The optical input port 3 receives the light output from the light source 1. The light received by the optical input port 3 is propagated to the optical mode converter 5 via the optical waveguide 4.

The optical mode converter 5 radiates light propagated through the optical waveguide 4 toward the object 8.

The light radiated from the optical mode converter 5 is reflected by the object 8.

The mirror 6 reflects the light radiated from the optical mode converter 5 and then reflected by the object 8 toward the optical receiver 10.

The lens 9 condenses the light reflected by the mirror 6 on the optical receiver 10.

The optical receiver 10 receives the light condensed by the lens 9, and outputs a second timing signal indicating the timing of receiving the light to the distance calculation unit 11.

The distance calculation unit 11 calculates a time T from when the light is output to when the light is received from the time $t_s$ when the first timing signal is received from the light source 1 and the time $t_r$ when the second timing signal is received from the optical receiver 10 as expressed in the following Formula (1).

$$T = t_r - t_s \qquad (1)$$

Next, the distance calculation unit 11 calculates the distance L from the optical scanning device 2 to the position hit by the light in the object 8 using the calculated time T as expressed in the following Formula (2).

$$L = \frac{c \times T}{2} \qquad (2)$$

In Formula (2), c represents the speed of light.

In order to be able to calculate the distance L to a plurality of positions on the face of the object 8, the actuator 7 rotates each of the optical mode converter 5 and the mirror 6 about the first shaft 7d. Further, the actuator 7 rotates each of the optical mode converter 5 and the mirror 6 about the second shaft 7e.

By the actuator 7 rotating each of the optical mode converter 5 and the mirror 6, it is possible to scan the light as indicated by the solid line in FIG. 4.

FIG. 4 is an explanatory diagram illustrating an example of a scanning trajectory of light.

The scanning trajectory of light illustrated in FIG. 4 appears in a case where the actuator 7 rotates each of the optical mode converter 5 and the mirror 6 as follows when light is output from the light source 1.

First, the actuator 7 moves the position of the light striking the face of the object 8 in a direction parallel to the y-axis by changing the rotation angle $\theta x$ around the first shaft 7d from $\theta x_1$ to $\theta x_2$ (hereinafter, referred to as a "first rotational operation"). Note that the distance calculation unit 11 calculates the distance L at a plurality of positions while the first rotational operation is being performed.

Next, the actuator 7 changes the position in the x-axis direction of the light striking the face of the object 8 by changing the rotation angle $\theta y$ around the second shaft 7e by $\Delta\theta$ (hereinafter, referred to as a "second rotational operation"). Note that the distance calculation unit 11 calculates the distance L at a plurality of positions while the second rotational operation is being performed. Hereinafter, a set of the first rotational operation and the second rotational operation is referred to as first optical scanning.

In the example of FIG. 4, since the actuator 7 changes the rotation angle $\theta y$ around the second shaft 7e just before the end of the first rotational operation, the scanning trajectory of the light draws a curve. In a case where the actuator 7 changes the rotation angle $\theta y$ around the second shaft 7e after the first rotational operation is ended, the position of the light striking the face of the object 8 changes in a direction parallel to the x-axis.

Next, the actuator 7 moves the position of the light striking the face of the object 8 in a direction parallel to the y-axis by changing the rotation angle $\theta x$ around the first shaft 7d from $\theta x_2$ to $\theta x_1$ (hereinafter, referred to as a "third rotational operation"). Note that the distance calculation unit 11 calculates the distance L at a plurality of positions while the third rotational operation is being performed.

Next, the actuator 7 changes the position in the x-axis direction of the light striking the face of the object 8 by changing the rotation angle $\theta y$ around the second shaft 7e by $\Delta\theta$ (hereinafter, referred to as a "fourth rotational operation"). Note that the distance calculation unit 11 calculates the distance L at a plurality of positions while the fourth rotational operation is being performed. Hereinafter, a set of the third rotational operation and the fourth rotational operation is referred to as second optical scanning.

In the example of FIG. 4, since the actuator 7 changes the rotation angle $\theta y$ around the second shaft 7e just before the end of the third rotational operation, the scanning trajectory of the light draws a curve. In a case where the actuator 7 changes the rotation angle $\theta y$ around the second shaft 7e after the third rotational operation is ended, the position of the light striking the face of the object 8 changes in a direction parallel to the x-axis.

The actuator 7 alternately and repeatedly performs the first optical scanning and the second optical scanning, so that the light scanning as indicated by the solid line in FIG. 4 is implemented. The actuator 7 may simultaneously perform both the first optical scanning and the second optical scanning.

The light source 1 can change a wavelength or a phase of light output to the optical scanning device 2.

In the ranging apparatus illustrated in FIG. 2, the light source 1 itself changes the wavelength or the phase of light. However, this is merely an example, and the light source 1 may change the wavelength or the phase of light in accordance with the control signal output from the control circuit 12.

The light source 1 changes the wavelength or the phase of the light output to the optical scanning device 2 to change the radiation direction of the light radiated from the optical mode converter 5.

The direction in which the radiation direction is switched is a direction that intersects with the direction in which the radiation direction is switched with rotation about the first shaft 7d, or a direction that intersects with the direction in which the radiation direction is switched with rotation about the second shaft 7e.

The dotted line illustrated in FIG. 4 indicates a scanning trajectory of light that appears as the radiation direction of light radiated from the optical mode converter 5 changes. The example of FIG. 4 illustrates that the direction in which the radiation direction is switched is a direction that intersects with the direction in which the radiation direction is switched with rotation about the first shaft 7d.

FIG. 2 illustrates that the direction in which the radiation direction is switched is both a direction that intersects the direction in which the radiation direction is switched with rotation about the first shaft 7d and a direction that intersects the direction in which the radiation direction is switched with rotation about the second shaft 7e.

For example, the light scanning trajectory as indicated by the dotted line in FIG. 4 appears, so that the resolution of the optical scanning in the direction parallel to the x-axis in the optical scanning device 2 is enhanced.

In the first embodiment described above, the optical scanning device 2 is configured to include the optical mode converter 5 that changes the radiation direction of the light in accordance with the change in wavelength or phase of the light output from the light source 1, and the actuator 7 that rotates the optical mode converter 5 about each of two shafts orthogonal to each other. Thus, the optical scanning device 2 can enhance the resolution of optical scanning as compared with an optical scanning device configured to scan light only by causing an actuator to rotate a mirror about two shafts.

In the optical scanning device 2 illustrated in FIG. 1, a rotation shaft in a direction parallel to the x-axis is the first shaft 7d, and a rotation shaft in a direction parallel to the y-axis is the second shaft 7e. However, this is merely an example, and the rotation shaft in the direction parallel to the x-axis may be the second shaft 7e and the rotation shaft in the direction parallel to the y-axis may be the first shaft 7d.

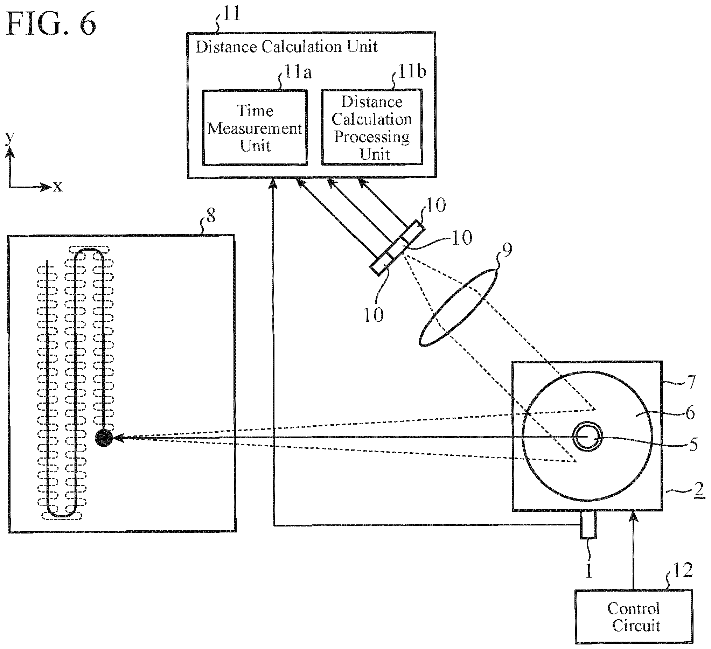

The ranging apparatus illustrated in FIG. 2 includes one optical receiver 10. However, this is merely an example, and for example, in a case where the reflection direction of light by the mirror 6 greatly changes, the plurality of optical receivers 10 may be arrayed one-dimensionally along the reflection direction of light as illustrated in FIG. 6.

FIG. 6 is a configuration diagram illustrating another ranging apparatus including the optical scanning device 2 according to the first embodiment.

Second Embodiment.

In a second embodiment, an optical scanning device 2 in which an optical waveguide 4' is branched into a plurality of branches, and optical mode converters 5-1, 5-2, and 5-3 are connected to a plurality of branch destinations 4a, 4b, and 4c, respectively, in the optical waveguide 4' will be described.

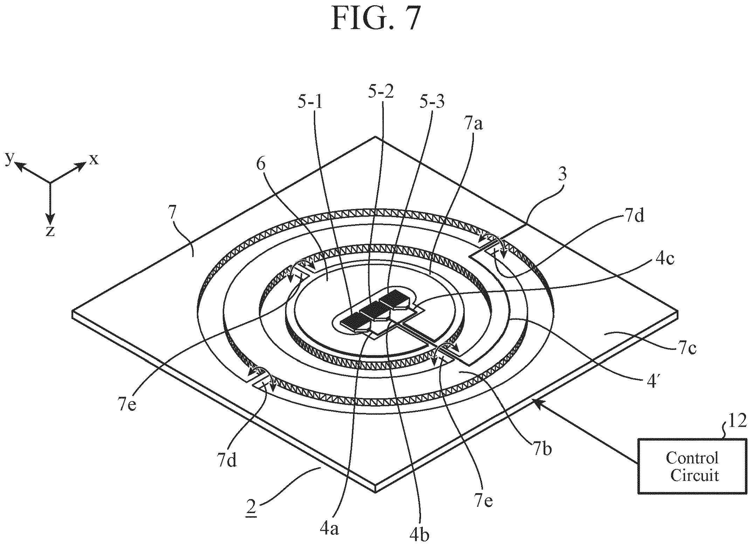

FIG. 7 is a configuration diagram illustrating an optical scanning device 2 according to the second embodiment. In FIG. 7, the same reference numerals as those in FIG. 1 denote the same or corresponding parts, and thus description thereof is omitted.

The optical waveguide 4' includes, for example, an optical path formed by a core and a cladding.

One end of the optical waveguide 4' is connected to the optical input port 3, and the other end of the optical waveguide 4' is branched into a plurality of branches.

In the optical scanning device 2 illustrated in FIG. 7, the other end of the optical waveguide 4' is branched into three. However, this is merely an example, and the other end of the optical waveguide 4' may be branched into two or four or more.

The optical mode converters 5-1, 5-2, and 5-3 are connected to the three branch destinations 4a, 4b, and 4c, respectively, at the other end of the optical waveguide 4'.

Each of the optical mode converters 5-1, 5-2, and 5-3 is an optical mode converter similar to the optical mode converter 5 illustrated in FIG. 2.

In the optical scanning device 2 illustrated in FIG. 7, the optical mode converters 5-1, 5-2, and 5-3 are arranged at positions that are different from each other and in directions that are different from each other with respect to the first planar portion 7a. Therefore, even if both the wavelengths and the phases of lights output from the light source 1 to the optical mode converters 5-1, 5-2, and 5-3 are the same as each other, the directions of the lights radiated from the optical mode converters 5-1, 5-2, and 5-3 are different from each other. Therefore, the lights radiated from the optical mode converters 5-1, 5-2, and 5-3 strike positions that are different from each other with respect to the object 8. The wavelengths or phases of the lights output from the light source 1 to the optical mode converters 5-1, 5-2, and 5-3 may be different from each other. Even in this case, the lights radiated from the optical mode converters 5-1, 5-2, and 5-3 strike positions that are different from each other with respect to the object 8.

In a case where the optical mode converters 5-1, 5-2, and 5-3 are arranged in directions that are different from each other, a plurality of optical receivers 10 may be used as illustrated in FIG. 6. The optical receivers 10 are arranged at positions and configured to receive lights radiated from the respective optical mode converters 5-1, 5-2, and 5-3 and then reflected by the object 8.

The first planar portion 7a of the actuator 7 holds the optical mode converters 5-1, 5-2, and 5-3 and the mirror 6.

The actuator 7 rotates each of the optical mode converters 5-1, 5-2, and 5-3 and the mirror 6 about the first shaft 7d, and rotates each of the optical mode converters 5-1, 5-2, and 5-3 and the mirror 6 about the second shaft 7e.

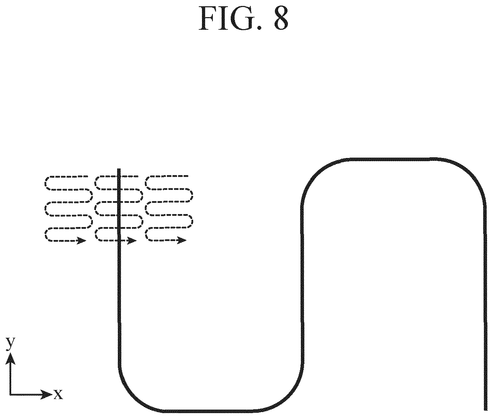

FIG. 8 is an explanatory diagram illustrating an example of a scanning trajectory of light.

Similarly to the first embodiment, the actuator 7 scans light as indicated by the solid line in FIG. 8 by alternately and repeatedly performing the first optical scanning and the second optical scanning.

The radiation directions of lights radiated from the optical mode converters 5-1, 5-2, and 5-3 change by the light source 1 changing the wavelengths or the phases of lights output to the optical scanning device 2.

As the radiation directions of the lights radiated from the optical mode converters 5-1, 5-2, and 5-3 change, a scanning trajectory of the light as indicated by the dotted line in FIG. 8 appears. The appearance of the scanning trajectory of the light as indicated by the dotted line in FIG. 8 enhances the resolution of the optical scanning in the direction parallel to the x-axis in the optical scanning device 2.

In the second embodiment described above, the optical scanning device 2 illustrated in FIG. 7 is configured in such a manner that the optical waveguide 4' is branched into a plurality of branches, the optical mode converters 5-1, 5-2, and 5-3 are connected to the plurality of branch destinations 4a, 4b, and 4c, respectively, in the optical waveguide 4', and the actuator 7 rotates each of the optical mode converters 5-1, 5-2, and 5-3 and the mirror 6 about the first shaft 7d and rotates each of the optical mode converters 5-1, 5-2, and 5-3 and the mirror 6 about the second shaft 7e. Therefore, the optical scanning device 2 illustrated in FIG. 7 can enhance the resolution of the optical scanning as compared with an optical scanning device configured to scan light only by causing an actuator to rotate a mirror about two shafts. In addition, the optical scanning device 2 illustrated in FIG. 7 can perform optical scanning of the entire face facing the optical scanning device 2 among the faces of the object 8 even if the operation of rotation about the second shaft 7e in the actuator 7 is reduced as compared with the optical scanning device 2 illustrated in FIG. 2.

Third Embodiment.

In a third embodiment, an optical scanning device 2 including a plurality of optical waveguides 4-1, 4-2, and 4-3 and a plurality of optical mode converters 5-1, 5-2, and 5-3 will be described.

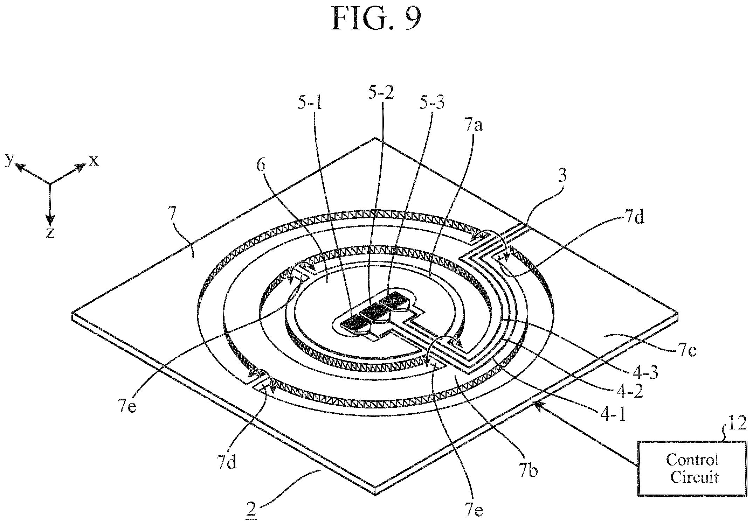

FIG. 9 is a configuration diagram illustrating the optical scanning device 2 according to the third embodiment. In FIG. 9, the same reference numerals as those in FIGS. 1 and 7 denote the same or corresponding parts, and thus description thereof is omitted.

The optical waveguides 4-1, 4-2, and 4-3 include, for example, an optical path formed by a core and a cladding.

One end of each of the optical waveguides 4-1, 4-2, and 4-3 is connected to one light source 1 via the optical input port 3.

The other end of the optical waveguide 4-1 is connected to the optical mode converter 5-1, and the other end of the optical waveguide 4-2 is connected to the optical mode converter 5-2. In addition, the other end of the optical waveguide 4-3 is connected to the optical mode converter 5-3.

The optical mode converters 5-1, 5-2, and 5-3 may be arranged in the same direction or may be arranged in directions different from each other.

The optical scanning device 2 illustrated in FIG. 9 includes the optical waveguides 4-1, 4-2, and 4-3 and the optical mode converters 5-1, 5-2, and 5-3. However, this is merely an example, and the number of the optical waveguides 4 included in the optical scanning device 2 illustrated in FIG. 9 and the number of the optical mode converters 5 included in the optical scanning device 2 may be two or four or more.

When the optical scanning device 2 includes the optical waveguides 4-1, 4-2, and 4-3 and the optical mode converters 5-1, 5-2, and 5-3, the same effects as those of the optical scanning device 2 illustrated in FIG. 7 can be obtained.

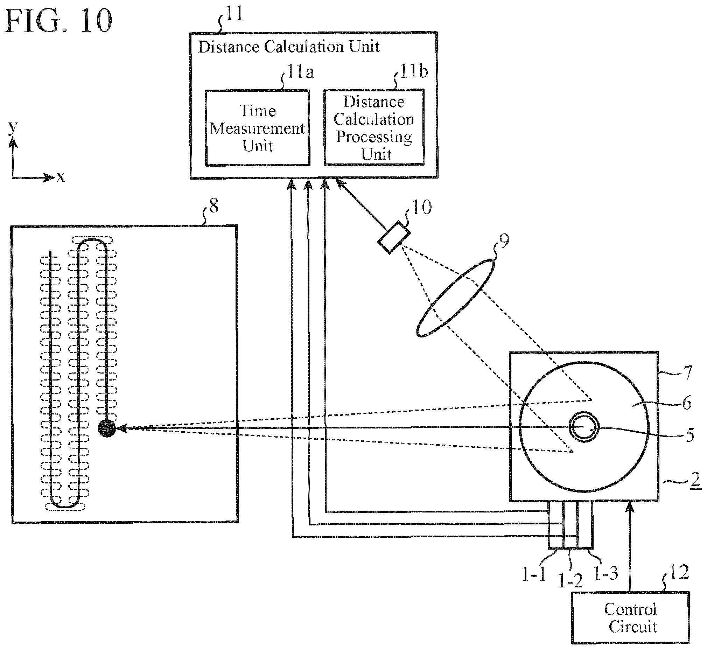

FIG. 10 is a configuration diagram illustrating a ranging apparatus including the optical scanning device 2 according to the third embodiment. In FIG. 10, the same reference numerals as those in FIG. 2 denote the same or corresponding parts, and thus description thereof is omitted.

The ranging apparatus illustrated in FIG. 10 includes the optical scanning device 2 illustrated in FIG. 9.

Each of the light sources 1-1, 1-2, and 1-3 is a light source similar to the light source 1 illustrated in FIG. 2.

The light source 1-1 outputs light to the optical mode converter 5-1 via the optical waveguide 4-1, and the light source 1-2 outputs light to the optical mode converter 5-2 via the optical waveguide 4-2. In addition, the light source 1-3 outputs light to the optical mode converter 5-3 via the optical waveguide 4-3.

When outputting light, each of the light sources 1-1, 1-2, and 1-3 notifies the distance calculation unit 11 that light has been output.

The light sources 1-1, 1-2, and 1-3 output lights having different wavelengths from each other or lights having different phases from each other.

That is, the light source 1-1 outputs the light having the wavelength $\lambda_1$ to the optical mode converter 5-1, the light source 1-2 outputs the light having the wavelength $\lambda_2$ to the optical mode converter 5-2, and the light source 1-3 outputs the light having the wavelength $\lambda_3$ to the optical mode converter 5-3.

Further, the light source 1-1 changes the wavelength $\lambda_1$ in a range of, for example, $(\lambda_1 - \Delta\lambda_1)$ to $(\lambda_1 + \Delta\lambda_1)$, the light source 1-2 changes the wavelength $\lambda_2$ in a range of, for example, $(\lambda_2 - \Delta\lambda_2)$ to $(\lambda_2 + \Delta\lambda_2)$, and the light source 1-3 changes the wavelength $\lambda_3$ in a range of, for example, $(\lambda_3 - \Delta\lambda_3)$ to $(\lambda_3 + \Delta\lambda_3)$.

Alternatively, the light source 1-1 outputs the light having the phase $\theta_1$ to the optical mode converter 5-1, the light source 1-2 outputs the light having the phase $\theta_2$ to the optical mode converter 5-2, and the light source 1-3 outputs the light having the phase $\theta_3$ to the optical mode converter 5-3.

Furthermore, the light source 1-1 changes the phase $\theta_1$, for example, in a range of $(\theta_1 - \Delta\theta_1)$ to $(\theta_1 + \Delta\theta_1)$, the light source 1-2 changes the phase $\theta_2$, for example, in a range of $(\theta_2 - \Delta\theta_2)$ to $(\theta_2 + \Delta\theta_2)$, and the light source 1-3 changes the phase $\theta_3$, for example, in a range of $(\theta_3 - \Delta\theta_3)$ to $(\theta_3 + \Delta\theta_3)$.

The time measurement unit 11a of the distance calculation unit 11 measures the time from when the light is radiated from each of the optical mode converters 5-1, 5-2, and 5-3 to when the reflected light is received by each of the optical mode converters 5-1, 5-2, and 5-3.

The distance calculation processing unit 11b calculates the distance from the optical scanning device 2 to the object 8 on the basis of each time measured by the time measurement unit 11a.

In the third embodiment described above, the ranging apparatus includes the plurality of light sources 1-1, 1-2, and 1-3, and the light sources 1-1, 1-2, and 1-3 are configured to output lights having mutually different wavelengths or lights having mutually different phases. Therefore, the switching directions of the radiation directions of the lights radiated from the optical mode converters 5-1, 5-2, and 5-3 can be set to different switching directions from each other.

In the ranging apparatus illustrated in FIG. 10, the light sources 1-1, 1-2, and 1-3 output lights having different wavelengths from each other or lights having different phases from each other.

Fourth Embodiment.

In a fourth embodiment, an optical scanning device 2 including an optical demultiplexer 13 that demultiplexes light propagated through an optical waveguide 4 for each wavelength will be described.

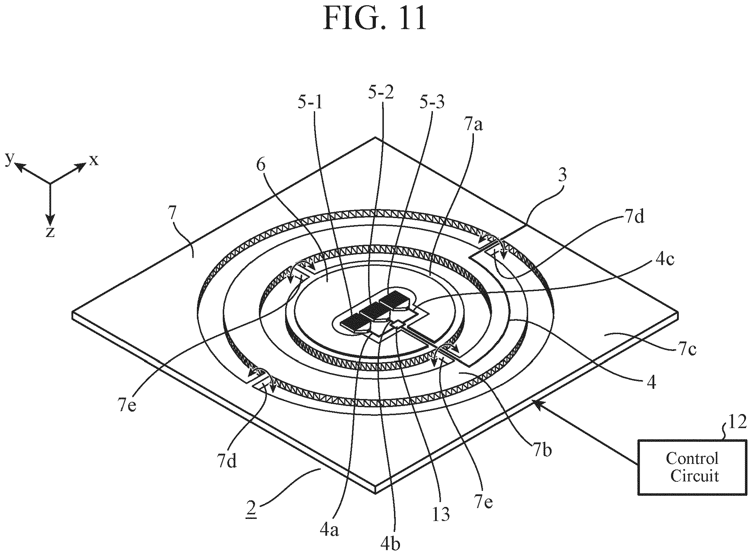

FIG. 11 is a configuration diagram illustrating the optical scanning device 2 according to the fourth embodiment. In FIG. 11, the same reference numerals as those in FIGS. 1 and 7 denote the same or corresponding parts, and thus description thereof is omitted.

The optical demultiplexer 13 is inserted in the middle of the optical waveguide 4.

The optical demultiplexer 13 demultiplexes the light propagated through the optical waveguide 4 for each wavelength.

When light including a plurality of wavelengths $\lambda_1$, $\lambda_2$, and $\lambda_3$ is output from the light source 1, the optical demultiplexer 13 demultiplexes the light propagated through the optical waveguide 4 for each wavelength. For example, the optical demultiplexer 13 outputs the light having the wavelength $\lambda_1$ to the optical mode converter 5-1, outputs the light having the wavelength $\lambda_2$ to the optical mode converter 5-2, and outputs the light having the wavelength $\lambda_3$ to the optical mode converter 5-3.

In the fourth embodiment described above, the optical scanning device 2 illustrated in FIG. 11 is configured to include the optical demultiplexer 13 that is inserted in the middle of the optical waveguide 4 and demultiplexes the light propagated through the optical waveguide 4 for each wavelength, and the plurality of optical mode converters 5-1, 5-2, and 5-3 that radiate a plurality of lights demultiplexed by the optical demultiplexer 13 toward the object 8 as the optical mode converter 5. Therefore, the optical scanning device 2 illustrated in FIG. 11 can enhance the resolution of the optical scanning as compared with an optical scanning device configured to scan light only by causing an actuator to rotate a mirror about two shafts. In addition, the optical scanning device 2 illustrated in FIG. 11 can perform optical scanning of the entire face facing the optical scanning device 2 among the faces of the object 8 even if the operation of rotation about the second shaft 7e in the actuator 7 is reduced as compared with the optical scanning device 2 illustrated in FIG. 2. Furthermore, the switching directions of the radiation directions of the lights radiated from the optical mode converters 5-1, 5-2, and 5-3 can be set to different switching directions from each other.

Fifth Embodiment.

In a fifth embodiment not being an embodiment of the invention, an optical scanning device 2 in which, instead of mounting the mirror 6, an optical mode converter 5' receives light reflected by an object 8 and outputs the received light to an optical waveguide 4 will be described.

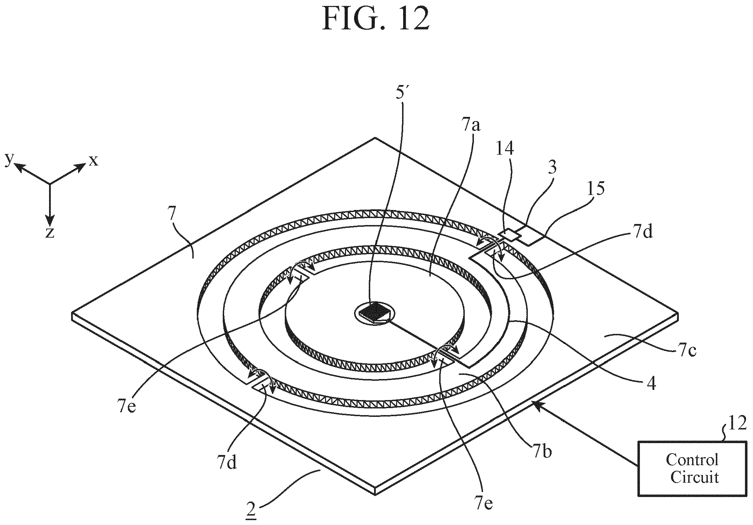

FIG. 12 is a configuration diagram illustrating the optical scanning device 2 according to the fifth embodiment. In FIG. 12, the same reference numerals as those in FIG. 1 denote the same or corresponding parts, and thus description thereof is omitted.

The optical mode converter 5' is an optical mode converter having a structure similar to that of the optical mode converter 5 illustrated in FIG. 1, and radiates light propagated through the optical waveguide 4 toward the object 8.

Unlike the optical mode converter 5 illustrated in FIG. 1, the optical mode converter 5' radiates light toward the object 8, receives light reflected by the object 8, and outputs the received light to the optical waveguide 4.

An optical circulator 14 is inserted into the optical waveguide 4.

The optical circulator 14 outputs the light output from the light source 1 to the optical mode converter 5' via the optical waveguide 4.

In addition, the optical circulator 14 outputs the light output from the optical mode converter 5' to the optical receiver 10 via an optical output port 15 described later.

The optical output port 15 is connected to the optical receiver 10 via, for example, an optical fiber.

In the optical scanning device 2 illustrated in FIG. 12, since the optical mode converter 5' is connected to the optical receiver 10 via the optical waveguide 4, the optical circulator 14, and the optical output port 15, the ranging apparatus does not need to include the lens 9.

Note that the light received by the optical mode converter 5' is propagated to the optical receiver 10 via the optical waveguide 4, the optical circulator 14, and the optical output port 15.

In the ranging apparatus according to the embodiments 1 to 5, the light source 1 or the light sources 1-1, 1-2, and 1-3 always change the wavelength of light output to the optical mode converter 5 or the like or the phase of light output to the optical mode converter 5 or the like.

However, this is merely an example, and the light source 1 or the light sources 1-1, 1-2, and 1-3 may temporarily change the wavelength of light output to the optical mode converter 5 or the like or the phase of light output to the optical mode converter 5 or the like.

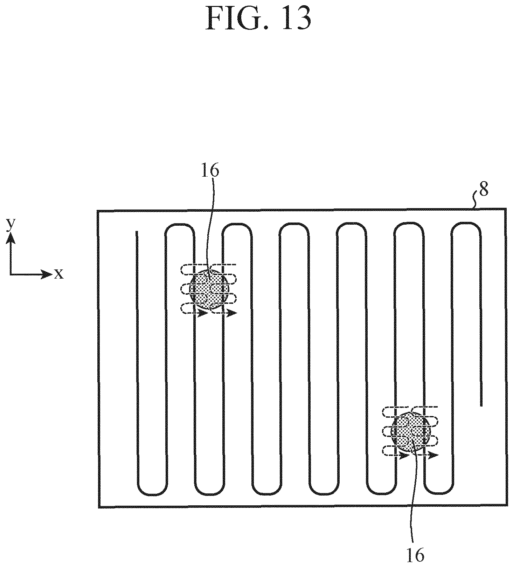

FIG. 13 is an explanatory diagram illustrating an example of a scanning trajectory of light.

In the example of FIG. 13, the light source 1 or the light sources 1-1, 1-2, and 1-3 change the wavelength of the light output to the optical mode converter 5 or the like or the phase of the light output to the optical mode converter 5 or the like only when ranging is performed at two positions 16 on the face of the object 8 facing the optical scanning device 2. When ranging is performed at a position other than the two positions 16, the wavelength of light output from the light source 1 or the light sources 1-1, 1-2, and 1-3 to the optical mode converter 5 or the like is constant, and the phase of light output to the optical mode converter 5 or the like is constant.

In a case where the position 16 where the ranging needs to be performed in detail is only a part of the face of the object 8, the light source 1 or the like temporarily changes the wavelength or the like of the light output to the optical mode converter 5 or the like, thereby reducing unnecessary ranging and shortening the ranging time without deteriorating the ranging accuracy of the position 16.

It should be noted that the present invention can freely combine the embodiments, modify any component of each of the embodiments, or omit any component in each of the embodiments.

INDUSTRIAL APPLICABILITY

The present invention is suitable for an optical scanning device that radiates light into space and then reflects light reflected by an object.

The present invention is suitable for a ranging apparatus including the optical scanning device.

REFERENCE SIGNS LIST

1, 1-1, 1-2, and 1-3: Light source, 2: Optical scanning device, 3: Optical input port, 4, 4', 4-1, 4-2, and 4-3: Optical waveguide, 4a, 4b, and 4c: Branch destination, 5, 5', 5-1, 5-2, and 5-3: Optical mode converter, 5a: Waveguide connection port, 5b: Radiation face, 6: Mirror, 7: Actuator, 7a: First planar portion, 7b: Second planar portion, 7c: Third planar portion, 7d: First shaft, 7e: Second shaft, 8: Object, 9: Lens, 10: Optical receiver, 11: Distance calculation unit, 11a: Time measurement unit, 11b: Distance calculation Processing unit, 12: Control circuit, 13: Optical demultiplexer, 14: Optical circulator, 15: Optical output port, 16: Position, 21: Memory, 22: Processor.

## Claims

1. An optical scanning device (2), comprising:

   a light source (1; 1-1 to 1-3) capable of changing a wavelength or a phase of a light to be output;
   an optical mode converter (5; 5-1 to 5-3) connected to an optical waveguide (4) through which the light output from the light source (1; 1-1 to 1-3) transmits, and configured to radiate the light received through the optical waveguide (4);
   a mirror (6) arranged around the optical mode converter (5; 5-1 to 5-3), and configured to reflect the light radiated from the optical mode converter (5; 5-1 to 5-3) and then reflected from an object (8), toward an optical receiver (10); and
   an actuator (7) having a first planar portion (7a), a second planar portion (7b), and a third planar portion (7c), wherein
   the second planar portion (7b) has a hole in which the first planar portion (7a) is disposed, and the third planar portion (7c) has a hole in which the second planar portion (7b) is disposed, wherein
   the third planar portion (7c) supports the second planar portion(7b) via a first shaft (7d), and is connected to the second planar portion (7b) via the first shaft (7d) and rotatable about the first shaft (7d),
   the second planar portion (7b) supports the first planar portion (7a) via a second shaft (7e) substantially perpendicular to the first shaft (7d), and is connected to the first planar portion (7a) via the second shaft (7e) and rotatable about the second shaft (7e),
   the first planar portion (7a) holds the optical mode converter (5; 5-1 to 5-3) and the mirror (6),
   the optical mode converter (5; 5-1 to 5-3) is configured to change a radiation direction of the light to be transmitted from the optical mode converter (5; 5-1 to 5-3), in accordance with a change in wavelength of the light output from the light source (1; 1-1 to 1-3) or phase of the light output from the light source (1; 1-1 to 1-3), and
   the actuator (7) is configured to rotate the first planar portion (7a) about each of the first and second shafts (7d and 7e).

2. The optical scanning device (2) according to claim 1, wherein
   the radiation direction of the light from the optical mode converter (5; 5-1 to 5-3) is changed in an X-axis direction by rotation of the first planar portion (7a) to the second planar portion (7b), and chanced in a Y-axis direction by rotation of the second planar portion (7b) to the third planar portion (7c), and the radiation direction of the light from the optical mode converter (5; 5-1 to 5-3) is changed by the optical mode converter (5; 5-1 to 5-3) in accordance with the change in wavelength of the light output from the light source (1; 1-1 to 1-3) or phase of the light output from the light source (1; 1-1 to 1-3).

3. The optical scanning device (2) according to claim 1, wherein

   as the optical mode converter, a plurality of optical mode converters (5-1 to 5-3) is used, wherein
   the structure of the optical mode converters (5-1 to 5-3) each is a boxlike structure that takes in the light propagated through the optical waveguide (4), each has a light radiation face (5b) provided with a grating coupler or an optical phase array, and are respectively arranged at positions different from each other, light radiation faces thereof being respectively arranged in directions different from each other.

4. The optical scanning device (2) according to claim 1, wherein

   as the optical mode converter, a plurality of the optical mode converters (5-1 to 5-3) is used, and
   lights having wavelengths different from each other or lights having phases different from each other are output from the light source (1-1 to 1-3) to each of the optical mode converters (5-1 to 5-3).

5. A ranging apparatus, comprising:

the optical scanning device (2) according to any one of claims 1 to 4;
an optical receiver (10) to receive reflected light that is light radiated from the optical mode converter (5) and then reflected by the object; and
a time measurement unit (11a) to measure a time from when light is radiated from the optical mode converter (5) to when the reflected light is received by the optical receiver (10).

6. The ranging apparatus according to claim 5, wherein

as the optical mode converter, a plurality of optical mode converters (5-1 to 5-3) is used, wherein
the structure of the optical mode converters (5-1 to 5-3) each is a boxlike structure that takes in the light propagated through the optical waveguide (4), each has a light radiation face (5b) provided with a grating coupler or an optical phase array, are respectively arranged at positions different from each other, light radiation faces thereof being respectively arranged in directions different from each other, wherein,
as the optical receiver, a plurality of optical receivers is used, and
the optical receivers are arranged at positions and configured to receive reflected lights that are lights radiated from the optical mode converters (5-1 to 5-3) and then reflected by the object, respectively.

## Patentansprüche

1. Optische Abtasteinrichtung (2), umfassend:

eine Lichtquelle (1; 1-1 bis 1-3), die in der Lage ist, eine Wellenlänge oder eine Phase eines auszugebenden Lichts zu ändern;
einen optischen Modenwandler (5; 5-1 bis 5-3), der mit einem optischen Wellenleiter (4) verbunden ist, durch den das von der Lichtquelle (1; 1-1 bis 1-3) ausgegebene Licht übertragen wird, und der eingerichtet ist, das durch den optischen Wellenleiter (4) empfangene Licht abzustrahlen;
einen Spiegel (6), der um den optischen Modenwandler (5; 5-1 bis 5-3) herum angeordnet ist und eingerichtet ist, das von dem optischen Modenwandler (5; 5-1 bis 5-3) abgestrahlte und dann von einem Objekt (8) reflektierte Licht zu einem optischen Empfänger (10) zu reflektieren; und
einen Aktuator (7), der einen ersten planaren Abschnitt (7a), einen zweiten planaren Abschnitt (7b) und einen dritten planaren Abschnitt (7c) aufweist, wobei der zweite planare Abschnitt (7b) ein Loch aufweist, in dem der erste planare Abschnitt (7a) angeordnet ist, und der dritte planare Abschnitt (7c) ein Loch aufweist, in dem der zweite planare Abschnitt (7b) angeordnet ist, wobei
der dritte planare Abschnitt (7c) den zweiten planaren Abschnitt (7b) über eine erste Welle (7d) trägt und über die erste Welle (7d) mit dem zweiten planaren Abschnitt (7b) verbunden und um die erste Welle (7d) drehbar ist, der zweite planare Abschnitt (7b) den ersten planaren Abschnitt (7a) über eine zweite Welle (7d) trägt, die im Wesentlichen senkrecht zu der ersten Welle (7d) ist, und über die zweite Welle (7e) mit dem ersten planaren Abschnitt (7a) verbunden und um die zweite Welle (7e) drehbar ist,
der erste planare Abschnitt (7a) den optischen Modenwandler (5; 5-1 bis 5-3) und den Spiegel (6) hält,
der optische Modenwandler (5; 5-1 bis 5-3) eingerichtet ist, eine Strahlungsrichtung des von dem optischen Modenwandler (5; 5-1 bis 5-3) zu übertragenden Lichts in Übereinstimmung mit einer Änderung der Wellenlänge des von der Lichtquelle (1; 1-1 bis 1-3) ausgegebenen Lichts oder der Phase des von der Lichtquelle (1; 1-1 bis 1-3) ausgegebenen Lichts zu ändern, und
der Aktuator (7) eingerichtet ist, den ersten planaren Abschnitt (7a) um jede der ersten und zweiten Welle (7d und 7e) zu drehen.

2. Optische Abtasteinrichtung (2) nach Anspruch 1, wobei
die Strahlungsrichtung des Lichts von dem optischen Modenwandler (5; 5-1 bis 5-3) in einer X-Achsen-Richtung durch Drehung des ersten planaren Abschnitts (7a) zu dem zweiten planaren Abschnitt (7b) geändert wird, und in einer Y-Achsen-Richtung durch Drehung des zweiten planaren Abschnitts (7b) zu dem dritten planaren Abschnitt (7c) geändert wird, und die Strahlungsrichtung des Lichts von dem optischen Modenwandler (5; 5-1 bis 5-3) durch den optischen Modenwandler (5; 5-1 bis 5-3) in Übereinstimmung mit der Änderung der Wellenlänge der Lichtausgabe von der Lichtquelle (1; 1-1 bis 1-3) oder der Phase der Lichtausgabe von der Lichtquelle (1; 1-1 bis 1-3) geändert wird.

3. Optische Abtasteinrichtung (2) nach Anspruch 1, wobei

als optischer Modenwandler eine Vielzahl von optischen Modenwandlern (5-1 bis 5-3) verwendet wird, wobei

die Struktur der optischen Modenwandler (5-1 bis 5-3) jeweils eine kastenartige Struktur ist, die das durch den optischen Wellenleiter (4) propagierte Licht aufnimmt, jeweils eine Lichtabstrahlungsfläche (5b) aufweist, die mit einem Gitterkoppler oder einem optischen Phasenarray vorgesehen ist, und die jeweils an voneinander verschiedenen Positionen angeordnet sind, wobei deren Lichtabstrahlungsflächen jeweils in voneinander verschiedenen Richtungen angeordnet sind.

4. Optische Abtasteinrichtung (2) nach Anspruch 1, wobei

als optischer Modenwandler eine Vielzahl der optischen Modenwandler (5-1 bis 5-3) verwendet wird, und Lichtstrahlen, die voneinander unterschiedliche Wellenlängen aufweisen, oder Lichtstrahlen, die voneinander unterschiedliche Phasen aufweisen, von der Lichtquelle (1-1 bis 1-3) an jeden der optischen Modenwandler (5-1 bis 5-3) ausgegeben werden.

5. Entfernungsmessvorrichtung, umfassend:

die optische Abtasteinrichtung (2) nach einem der Ansprüche 1 bis 4;
einen optischen Empfänger (10) zum Empfangen von reflektiertem Licht, das von dem optischen Modenwandler (5) abgestrahlt und dann von dem Objekt reflektiert wird; und
eine Zeitmesseinheit (11a) zum Messen einer Zeit von der Abstrahlung von Licht aus dem optischen Modenwandler (5) bis zu dem Empfang des reflektierten Lichts durch den optischen Empfänger (10).

6. Entfernungsmessvorrichtung nach Anspruch 5, wobei

als optischer Modenwandler eine Vielzahl von optischen Modenwandlern (5-1 bis 5- 3) verwendet wird, wobei die Struktur der optischen Modenwandler (5-1 bis 5-3) jeweils eine kastenartige Struktur ist, die das durch den optischen Wellenleiter (4) propagierte Licht aufnimmt, jeweils eine Lichtabstrahlungsfläche (5b) aufweist, die mit einem Gitterkoppler oder einem optischen Phasenarray vorgesehen ist, die jeweils an voneinander verschiedenen Positionen angeordnet sind, wobei deren Lichtabstrahlungsflächen jeweils in voneinander verschiedenen Richtungen angeordnet sind, wobei,
als der optische Empfänger eine Vielzahl von optischen Empfängern verwendet wird, und
die optischen Empfänger an Positionen angeordnet sind und eingerichtet sind, reflektiertes Licht zu empfangen, das jeweils von den optischen Modenwandlern (5-1 bis 5-3) abgestrahlt und dann von dem Objekt reflektiert wird.

## Revendications

1. Dispositif de balayage optique (2), comprenant :

une source de lumière (1 ; 1-1 à 1-3) capable de changer une longueur d'onde ou une phase d'une lumière à délivrer en sortie ;
un convertisseur de mode optique (5 ; 5-1 à 5-3) connecté à un guide d'ondes optique (4) à travers lequel la sortie de lumière depuis la source de lumière (1 ; 1-1 à 1-3) est transmise, et configuré pour rayonner la lumière reçue à travers le guide d'ondes optique (4) ;
un miroir (6) agencé autour du convertisseur de mode optique (5 ; 5-1 à 5-3), et configuré pour réfléchir la lumière rayonnée à partir du convertisseur de mode optique (5 ; 5-1 à 5-3) puis réfléchie à partir d'un objet (8), vers un récepteur optique (10) ; et
un actionneur (7) présentant une première partie plane (7a), une deuxième partie plane (7b) et une troisième partie plane (7c), dans lequel la deuxième partie plane (7b) présente un trou dans lequel la première partie plane (7a) est disposée, et la troisième partie plane (7c) présente un trou dans lequel la deuxième partie plane (7b) est disposée, dans lequel
la troisième partie plane (7c) supporte la deuxième partie plane (7b) via un premier arbre (7d), et est reliée à la deuxième partie plane (7b) via le premier arbre (7d) et peut tourner autour du premier arbre (7d),
la deuxième partie plane (7b) supporte la première partie plane (7a) via un second arbre (7e) sensiblement perpendiculaire au premier arbre (7d), et est connectée à la première partie plane (7a) via le second arbre (7e) et peut tourner autour du second arbre (7e),
la première partie plane (7a) supporte le convertisseur de mode optique (5 ; 5-1 à 5-3) et le miroir (6),
le convertisseur de mode optique (5 ; 5-1 à 5-3) est configuré pour changer une direction de rayonnement de la lumière à transmettre à partir du convertisseur de mode optique (5 ; 5-1 à 5-3), en fonction d'un changement de longueur d'onde de la sortie de lumière depuis la source de lumière (1; 1-1 à 1-3) ou de phase de la sortie de lumière depuis la source de lumière (1 ; 1-1 à 1-3), et

l'actionneur (7) est configuré pour faire tourner la première partie plane (7a) autour de chacun des premier et second arbres (7d et 7e).

2. Dispositif de balayage optique (2) selon la revendication 1, dans lequel
la direction de rayonnement de la lumière provenant du convertisseur de mode optique (5 ; 5-1 à 5-3) est changée dans une direction d'axe X par rotation de la première partie plane (7a) vers la deuxième partie plane (7b), et changée dans une direction d'axe Y par rotation de la deuxième partie plane (7b) vers la troisième partie plane (7c), et la direction de rayonnement de la lumière provenant du convertisseur de mode optique (5 ; 5-1 à 5-3) est changée par le convertisseur de mode optique (5 ; 5-1 à 5-3) conformément au changement de longueur d'onde de la sortie de lumière depuis la source de lumière (1 ; 1-1 à 1-3) ou de phase de la sortie de lumière depuis la source de lumière (1; 1-1 à 1-3).

3. Dispositif de balayage optique (2) selon la revendication 1, dans lequel

en tant que convertisseur de mode optique, une pluralité de convertisseurs de mode optique (5-1 à 5-3) est utilisée, dans lequel
la structure des convertisseurs de mode optique (5-1 à 5-3) est chacune une structure en forme de boîte qui prend la lumière propagée à travers le guide d'ondes optique (4), chacune présente une face de rayonnement de lumière (5b) pourvue d'un coupleur de réseau ou d'un réseau optique à commande de phase, et sont respectivement agencées dans des positions différentes les unes des autres, leurs faces de rayonnement de lumière étant agencées respectivement dans des directions différentes les unes des autres.

4. Dispositif de balayage optique (2) selon la revendication 1, dans lequel

en tant que convertisseur de mode optique, une pluralité de convertisseurs de mode optique (5-1 à 5-3) est utilisée, et
des lumières présentant des longueurs d'onde différentes les unes des autres ou des lumières présentant des phases différentes les unes des autres sont délivrées en sortie à partir de la source de lumière (1-1 à 1-3) vers chacun des convertisseurs de mode optique (5-1 à 5-3).

5. Appareil de télémétrie, comprenant :

le dispositif de balayage optique (2) selon l'une quelconque des revendications 1 à 4 ;
un récepteur optique (10) pour recevoir de la lumière réfléchie qui est une lumière rayonnée à partir du convertisseur de mode optique (5) puis réfléchie par l'objet ; et
une unité de mesure de temps (11a) pour mesurer un temps entre le moment où la lumière est rayonnée à partir du convertisseur de mode optique (5) et le moment où la lumière réfléchie est reçue par le récepteur optique (10).

6. Appareil de télémétrie selon la revendication 5, dans lequel

en tant que convertisseur de mode optique, une pluralité de convertisseurs de mode optique (5-1 à 5-3) est utilisée, dans lequel
la structure des convertisseurs de mode optique (5-1 à 5-3) est chacune une structure en forme de boîte qui prend la lumière propagée à travers le guide d'ondes optique (4), chacune présente une face de rayonnement de lumière (5b) pourvue d'un coupleur de réseau ou d'un réseau optique à commande de phase, sont respectivement agencées dans des positions différentes les unes des autres, leurs faces de rayonnement de lumière étant agencées respectivement dans des directions différentes les unes des autres, dans lequel,
en tant que récepteur optique, une pluralité de récepteurs optiques est utilisée, et
les récepteurs optiques sont agencés dans des positions et configurés pour recevoir des lumières réfléchies qui sont des lumières rayonnées à partir des convertisseurs de mode optique (5-1 à 5-3) puis réfléchies par l'objet, respectivement.

FIG. 1

FIG. 2

EP 4 155 760 B1

# FIG. 3

# FIG. 4

Position Corresponding to $\theta x_1$

Change Corresponding to $\Delta\theta$

Position Corresponding to $\theta x_2$

# FIG. 5

Light

$\underline{5}$

5b

5a

FIG. 6

# FIG. 7

EP 4 155 760 B1

# FIG. 8

FIG. 9

FIG. 10

EP 4 155 760 B1

FIG. 11

FIG. 12

# FIG. 13

**EP 4 155 760 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2018267151 A1
- US 2018136318 A1
- WO 2018200754 A1
- US 2019391243 A1
- WO 2019002514 A1
- JP 2007522529 A